# EUROPEAN PATENT SPECIFICATION

(11) **EP 3 198 769 B1**
(45) Date of publication and mention of the grant of the patent: **22.04.2020**
(21) Application number: 15770507.0
(22) Date of filing: 24.09.2015
(51) Int. Cl.: H04L 5/00, H04L 5/14

(54) **INTER-MODE CARRIER AGGREGATION**
INTERMODUS-TRÄGERAGGREGATION
AGRÉGATION DE PORTEUSES INTER-MODE

(30) Priority: 24.09.2014 GB 201416821
(43) Date of publication of application: 02.08.2017
(73) Proprietor: Vodafone IP Licensing Limited, London W2 6BY (GB)
(72) Inventor: ANAYA CHAMORRO, Luis Manuel, London W2 6BY (GB); IRMER, Ralf, London W2 6BY (GB); BOUTON,Eric, London W2 6BY (GB)
(74) Representative: Boult Wade Tennant LLP
(86) International application number: PCT/EP2015/072010
(87) International publication number: WO 2016/046332

(56) References cited:
- US-A1- 2014 029 484
- US-A1- 2014 086 078
- INTEL CORPORATION: "Considerations on FDD-TDD CA demodulation tests", 3GPP DRAFT; R4-145259, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Dresden Germany; 20140818 - 20140822 12 August 2014 (2014-08-12), XP050825999, Retrieved from the Internet: URL:http://www.3gpp.org/ftp/tsg_ran/WG4_Ra dio/TSGR4_72/Docs/ [retrieved on 2014-08-12]
- CATT: "Discussion on TDD inter-band CA with different UL-DL configurations on different bands", 3GPP DRAFT; R4-115124, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Zhuhai; 20111010, 3 October 2011 (2011-10-03), XP050544211, [retrieved on 2011-10-03]

## Description

### Technical Field of the Invention

The invention concerns a method for effecting carrier aggregation for a mobile terminal in a cellular network environment between a first carrier of a Frequency Division Duplex (FDD) system and a second carrier of a Time Division Duplex (TDD) system and a corresponding controller for a cellular network communications apparatus.

### Background to the Invention

Modern cellular radio network systems, such as those standardised by the Third Generation Partnership Project (3GPP), are allocated frequency spectrum to allow communication between each User Equipment (UE), also referred to as a mobile terminal, and one or more base stations. The frequency allocation is put in place to allow operation in one of two modes: Frequency Division Duplex (FDD); and Time Division Duplex (TDD).

As is well known, FDD operation uses one frequency allocation (channel) for uplink transmissions and an entirely distinct frequency allocation for downlink transmissions. The frequency gap (guard band) between the uplink and downlink frequency allocations is sufficient such that uplink transmissions from the UE do not cause interference to the downlink receiver and likewise, downlink transmissions from the base station do not cause interference to its uplink receiver. In this way, simultaneous uplink and downlink communication is possible. In contrast, a single frequency allocation is used for both uplink and downlink on TDD systems. During certain time periods, the frequency allocation is used for uplink transmissions and during other time periods, the same frequency allocation is used for downlink transmissions. In this way, no interference is received due to the transmitter at the same station.

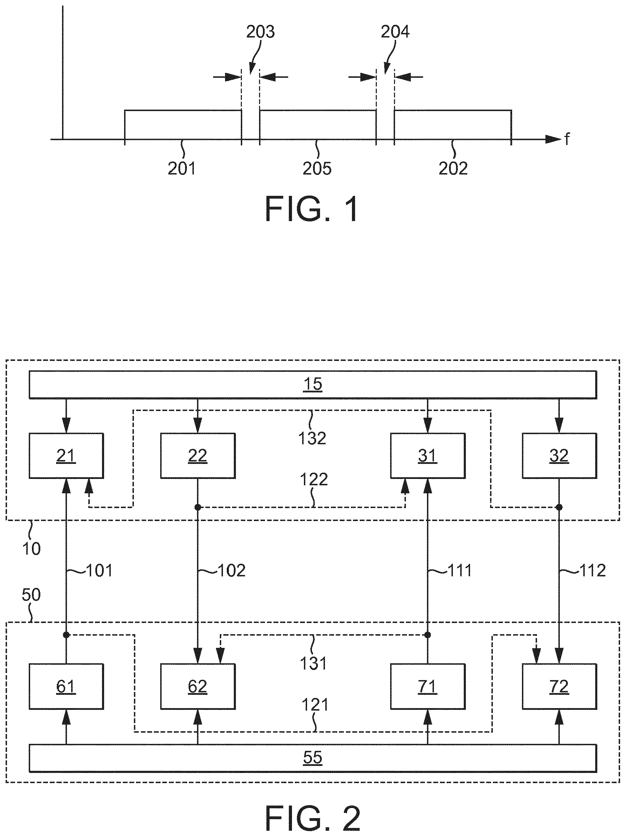

In practice, it is often considered efficient to place the frequency allocation for the TDD system between the frequency allocation for the FDD uplink and the frequency allocation for the FDD downlink. Referring to Figure 1, there is schematically shown an example frequency spectrum allocation to FDD and TDD cellular network systems. The frequency allocation for the FDD uplink 201 is considerably separated from the frequency allocation for the FDD downlink 202. In between these two allocations, a frequency allocation is provided for the TDD system 205. The FDD uplink frequency allocation 201 is separated from the TDD frequency allocation 205 by a first guard band 203. The TDD frequency allocation 205 is also separated from the FDD downlink allocation 202 by a second guard band 204. Such a frequency allocation is mandated in many countries in the 2.6GHz section of the frequency spectrum.

The size and end-points of the frequency allocations 201, 202, 205 may vary in different countries. Moreover, the size and end-points of the guard bands 203, 204 may also differ. Indeed, the size of guard bands 203, 204 may be as low as 15 MHz or even zero. This is considered sufficient such that a UE can communicate either with the FDD system or with the TDD system. Conversely, a base station can either operate with either the FDD system or TDD system. Existing implementations of the FDD and TDD systems within these frequency allocations would not allow simultaneous operation of the FDD and TDD systems at a single base station or conversely, simultaneous communication with the FDD and TDD systems at a UE. At the base station, interference from the TDD downlink may disrupt the FDD uplink and/or interference from the FDD downlink may disrupt the TDD uplink. At the UE, interference from the FDD uplink may disrupt the TDD downlink and/or interference from TDD uplink may disrupt the FDD downlink. This may be termed "adjacent-channel" interference.

Network operators are unceasingly seeking to make the most efficient use of the limited radio spectrum allocation available. A known technique for increasing the bandwidth on the uplink, downlink or both is carrier aggregation. This technique is particularly applicable for systems based on Orthogonal Frequency Division Multiplex (OFDM), such as those developed from the Long Term Evolution (LTE) architecture specified by 3GPP. Increasing the bandwidth can increase the data throughput and make more efficient use of spectral resources. Existing carrier aggregation techniques can be applied in both uplink and downlink for both FDD and TDD systems.

Nevertheless, it will be recognised that the application of carrier aggregation in the uplink, downlink or both between an FDD system carrier and a TDD system carrier, when the frequency allocations for these two systems are in the form shown in Figure 1, for example, or another configuration where mutual interference may occur, seems to be impossible. The interference caused between the FDD and TDD systems would appear to prevent any useful carrier aggregation from taking place. Although such carrier aggregation would be desirable, the close frequency allocation of these two systems presents a highly significant challenge to its implementation.

US 2014/086078 A1 relates to wireless communication. A plurality of component carriers configured for transmission from a base station to a user equipment are determined. The ratio of uplink sub-frames to downlink sub-frames in the transmission timeline is adjusted.

US 2014/029484 A1 relates to a facilitating control channel transmission in an intra-cell carrier aggregation system by applying the uplink control channel transmission timing of an FDD cell for transmitting the uplink control channel corresponding to the downlink data of a TDD cell.

"Considerations on FDD-TDD CA-Demodulation tests", 3GPP R4-145259 discusses FDD and TDD carrier aggregation and suggests the cross-carrier scheduling can be used to reduce inter-cell interference of a physical downlink control channel, in scenarios like range extension zones of heterogeneous networks.

### Summary of the Invention

Against this background, there is provided a method for effecting carrier aggregation for a mobile terminal in a cellular network environment between a first carrier of an FDD system and a second carrier of a TDD system according to claim 1 and a controller for a cellular network communications apparatus in accordance with claim 14. Various aspects and embodiments of the invention are set out in the appended claims.

It has been recognised that one or more transmission and/or reception parameters of the FDD and/or TDD systems can be controlled to reduce the level of interference and thereby allow some form of carrier aggregation to take place. This may especially be useful when the FDD and TDD systems operate in adjacent channels and/or the same frequency band. Other preferred features are disclosed with reference to the claims and in the description below. The reduction in interference is achieved by increasing the frequency separation between a transmitter on one system and a receiver filter band of the other system. Additionally, it may be achieved: by changing the transmission timings such that interference causing transmissions are not made when the interference-susceptible receiver is in use; or by a combination of these techniques.

To create additional frequency separation, one implementation may reduce the resource block allocation (allocation of data to sub-carriers) at an edge of the frequency allocation in an OFDM signal. This may effectively restrict the bandwidth of the OFDM transmission and thereby increase the frequency separation between that bandwidth and the receiver filter of the other system. A second approach (which may be combined with other approaches) may change the power limitations at the edge of the frequency allocation, again thereby increasing the frequency separation.

The timing of transmissions may also be adjusted, for example to avoid transmitting on one system when the receiver of the other system that is susceptible to interference is in use.

These techniques may result in one or more of: increased throughput (bit-rate, for example within a certain error or other Quality of Service tolerance) on the uplink and/or downlink, due to the use of carrier aggregation; and a redistribution of throughput between downlink and uplink. Unlike conventional carrier aggregation approaches, such carrier aggregation may not necessarily result in the total capacity being the sum of the capacities of the individual systems, since some of the capacity may be sacrificed in order to reduce interference. Nevertheless, the total capacity of the systems using carrier aggregation may be greater than the capacity of each individual system alone. Additionally or alternatively, the redistribution of downlink and uplink resources (which may be possible without the need to change any existing standards using this technique) may allow the increase of resources on one of the downlink or uplink by sacrificing resources in the other direction. In current implementations, the ratio of downlink to uplink traffic is typically 8:1, such that the provision of additional downlink resources using carrier aggregation at the expense of uplink resources may nevertheless be beneficial.

### Brief Description of the Drawings

The invention may be put into practice in a number of ways, and preferred embodiments will now be described by way of example only and with reference to the accompanying drawings, in which:
Figure 1 schematically shows an example frequency spectrum allocation to FDD and TDD cellular network systems;
Figure 2 depicts a block diagram of a mobile terminal and base station in communication with each other, in accordance with an embodiment;
Figure 3A illustrates schematically a transmission/reception configuration over a range of frequencies and times, according to a first implementation;
Figure 3B illustrates schematically a transmission/reception configuration over a range of frequencies and times, according to a variation of the implementation shown in Figure 3A;
Figure 4A illustrates schematically a transmission/reception configuration over a range of frequencies, according to a second implementation.
Figure 4B shows a plot of transmission power against frequency for a variant of the second implementation; and
Figure 5 illustrates schematically a transmission/reception configuration over a range of frequencies and times, according to a third implementation.

### Detailed Description of Preferred Embodiments

Referring first to Figure 2, there is depicted a block diagram of a mobile terminal and base station in commnucation with each other, in accordance with an embodiment. Both the base station 10 and the mobile terminal (UE) 50 have the capability to communicate using an FDD system and using a TDD system, both of which have a frequency allocation in accordance with Figure 1. Thus, the FDD uplink frequency allocation 201 is separated from the TDD frequency allocation 205 by a first guard band 203 and the TDD frequency allocation 205 is separated from the FDD downlink frequency allocation 202 by a second guard band 204.

The base station therefore comprises: an FDD uplink receiver 21; an FDD downlink transmitter 22; a TDD uplink receiver 31; and a TDD downlink transmitter 32. The base station 10 further comprises a controller 15, which is in communication with the receivers 21, 31 and transmitters 22, 32. The UE 50 comprises: an FDD transmitter 61; an FDD receiver 62; a TDD transmitter 71; and a TDD receiver 72. The UE 50 further comprises a controller 55, in communication the transmitters 61, 71 and receivers 62, 72. In practice, the FDD and TDD systems will operate on the 2.6GHz LTE band. The transmitters 61, 71 and/or receivers 62, 72 may share equipment, such as a Remote Radio Head or antenna system.

Hence, UE 50 is in communication with base station 10 by means of FDD uplink signal 101 and TDD uplink signal 111. Base station 10 transmits to UE 50 by means of FDD downlink signal 102 and TDD downlink signal 112. Due to the frequency allocation as depicted in Figure 1, FDD downlink signal 102 also causes first base station interference 122 to TDD uplink receiver 31. Similarly, TDD downlink transmission 112 causes second base station interference 132 to FDD uplink receiver 21. In the UE 50, FDD uplink transmission 101 causes a first UE interference 121 to TDD downlink receiver 72 and TDD uplink transmission 111 causes second UE interference 131 to FDD downlink receiver 62. The magnitude and significance of these interference components may depend on a number of factors, including the size of the first and second guard bands 203, 204.

To effect uplink carrier aggregation, FDD uplink signal 101 is aggregated with TDD uplink signal 111. Additionally or alternatively, carrier aggregation may be effected in the downlink and then, FDD downlink signal 102 is aggregated with TDD downlink signal 112. In either case, the FDD system may provide the primary carrier (as defined by 3GPP standards), the TDD system providing the secondary carrier or the TDD system may provide the primary carrier, the FDD system providing the secondary carrier.

Effecting carrier aggregation may be possible by controlling the level of interference. Interference may be present in the base station 10, the UE 50 or both, as discussed above. This control may be achieved by adjusting one or more transmission or reception parameters at the base station 10 using controller 15, UE 50 using controller 55 or both.

In general terms, there is therefore provided a method for effecting carrier aggregation for a mobile terminal in a cellular network environment between a first carrier of an FDD system and a second carrier of a TDD system. A receiver of one of the FDD or TDD systems is susceptible to interference from a transmitter of the other system (for example, due to co-location, being part of the same station or sharing radio equipment, such as a Remote Radio Head or Baseband Unit). The method comprises: setting at least one parameter of the receiver of the one system and/or the transmitter of the other system such that a non-zero (data) throughput is achieved by communication of the first carrier and a non-zero (data) throughput is achieved by communication of the second carrier. The first and second carriers may both be uplink carriers or they may both be downlink carriers. Typically, the receiver of the one system and the transmitter of the other system are part of the same station (for example, a base station, which may comprise multiple cells, eNodeBs or similar, or a mobile terminal), although they could be part of different base stations, for instance. The station may be defined by one or more of: shared equipment; and co-location. Throughput, in this context, may be understood as communication of user plane data and/or control plane data, with an error rate below an acceptable (predefined) threshold, which may be set based on a Quality of Service (QoS) characteristic of one or more services being used by the mobile terminal.

The parameter may be set in many embodiments, such that the combined throughput achieved by the communication of the first and second carriers is greater than the throughput achieved by the communication of the first carrier alone and/or the second carrier alone. Additionally or alternatively, the parameter may be set such that the total throughput achieved by the downlink of the FDD and TDD systems is set to be at least a first desired level and/or the total throughput achieved by the uplink of the FDD and TDD systems is set to be at least a second desired level. In other words, the total throughput achieved by combining the two systems (whether carrier aggregation is used in both uplink and downlink or only in one direction) may be set to match the traffic pattern between the UE and the base station. For instance, if the traffic between the UE and base station is largely in the downlink, the parameter may be set to achieve a total throughput in the downlink of a minimum level to meet the traffic pattern. Conversely, the total throughput achieved by the uplink may be reduced by the increasing throughput achieved by the downlink, but nevertheless may be set to achieve at least a desired level. In other cases, the desired level may be based on at least one characteristic (such as a QoS characteristic) of one or more services being used by the mobile terminal. For example, downlink heavy services (such as streaming content) may indicate a minimum downlink total throughput, conversational class services may dictate a minimum uplink total throughput and a minimum downlink total throughput and uplink-heavy services (such as video uploads) may dictate a minimum uplink total throughput.

The total throughput may further be established in either or a combination of: a predetermined manner, for example by estimating the channel and/or interference conditions before transmission; and an adaptive or dynamic manner, by changing parameters based on measurement and/or feedback.

The at least one parameter may comprise one or more of: a timing parameter; a resource allocation parameter; a frequency spectral profile parameter; a power profile (frequency spectral) parameter; and a filter configuration parameter. A detailed discussion of how these different parameters may be set to effect carrier aggregation in accordance with the invention will be discussed below.

Typically, the TDD and FDD system are configured to operate using frequency allocations in a 2.6 GHz band and/or using an LTE (LTE-advanced) architecture, although other bands and network architectures may be used. The system described above uses two aggregated carriers, but it is possible for more than two carriers to be provided. Also, one or more additional carriers (using FDD or TDD) may be provided in a frequency band different from the FDD and TDD system, such as an 800 MHz frequency band. In this case, one of the FDD or TDD system may provide the primary carrier and the additional carrier or carriers may be secondary carriers or vice versa. In one embodiment, a primary carrier may be provided in the 800 MHz band and the FDD and TDD systems in the 2.6 GHz band provide secondary carriers.

In some embodiments, the method may further comprise: scheduling of data for transmission across the first and second carriers. Optionally, the step of scheduling may comprise: scheduling only feedback data for one of the first and second carriers, for example in only the uplink (or alternatively, in only the downlink).

In another aspect, there may be provided a computer program, configured to carry out any method as herein described when operated by a processor, or as control logic (which may be digital) configured to carry out any method as herein described. A controller configured to operate in accordance with any method as described herein may further be provided in a yet further aspect.

### Improved Resource Allocation

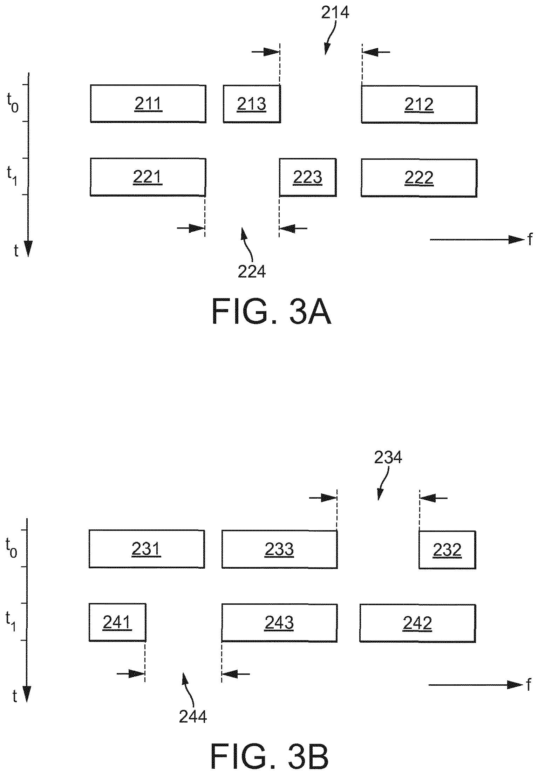

Referring to Figure 3A, there is illustrated schematically a transmission or reception configuration over a range of frequencies and times, according to a first implementation. The frequency (f) and time (t) axes are indicated in this drawing. The frequency axis is intended to correspond schematically with the allocations indicated in Figure 1. This is intended to show increased frequency separation between the transmission from one system and the reception from another system in comparison with the frequency allocations.

In a first time duration (frame) t₀, the FDD uplink transmission 211 uses the entire FDD uplink frequency allocation and similarly, the FDD downlink transmission 212 uses the entire FDD downlink allocation. In the UE, the block labelled 212 also indicates the receiver bandwidth. However, the TDD uplink transmission 213 is restricted to only a part of the TDD frequency allocation. Specifically, the part used by the TDD transmission 213 is the part closest in frequency to the FDD uplink frequency allocation. In this way, the frequency separation 214 between the TDD uplink transmission 213 and FDD downlink filter bandwidth 212 is sufficient to allow no more than a manageable level of interference between the TDD uplink transmission and FDD downlink receiver.

At a second time duration t₁, which would normally be contiguous with the first time duration t₀ (although a guard interval may interpose), the FDD uplink transmission 221 again uses the whole FDD uplink frequency allocation and the FDD downlink transmission 222 likewise uses the whole of the FDD downlink frequency allocation. Then, the TDD transmission 223 is a downlink transmission and only uses a part of the TDD frequency allocation, specifically the part closest to the FDD downlink frequency allocation. In this way, the gap or frequency separation 224 between the FDD uplink bandwidth and the TDD downlink bandwidth is large enough to assist in allowing both systems to coexist at the base station. In this context, the FDD uplink transmission 221 may be understood as also indicating the filter bandwidth for the FDD receiver 21 at the base station 10. It should be noted that, at the base station, improved (tighter and/or narrower band) filter technologies for the uplink FDD and/or TDD receiver or receivers may mitigate the need for increased frequency separation between the systems. The problem may be more significant at the UE, where such improved filter technologies may not be available, due to the constraints inherent in UE design.

The first time period to and second time period t₁ may be alternated in order to increase both the uplink and the downlink capacity. Alternatively, the sequence in which these time periods may be employed may be varied in order to control the total uplink throughput and total downlink throughput to meet network traffic requirements.

In practice, the limiting of the bandwidth for the TDD uplink transmission 213 and/or the TDD downlink transmission 223 may be achieved by appropriate allocation of resource blocks in an OFDM signal. In other words, certain sub-carriers need not be loaded and, the bandwidth of the OFDM signal is reduced thereby.

This implementation has been discussed with reference to the TDD transmission bandwidth. However, it will be recognised that, conversely, the FDD transmission bandwidth can be additionally or alternatively adjusted. Referring next to Figure 3B, there is illustrated schematically a transmission or reception configuration over a range of frequencies and times, according to a variation of the implementation shown in Figure 3A. Again, a first time period to, and a second time period t₁ are shown. In the first time period t₀, the FDD uplink transmission 231 and the TDD uplink transmission 233 both use their entire frequency allocation. However, the FDD downlink transmission 232 is reduced in bandwidth, thereby increasing the frequency separation 234 between the bandwidth of the TDD uplink transmission 233 and the bandwidth of the FDD downlink transmission 232. In second time period t₁, the FDD downlink transmission 242 uses its entire frequency allocation as does the TDD downlink transmission 243. Then, the FDD uplink transmission 241 only uses a part of the bandwidth, away from the TDD frequency allocation. In this way, the frequency separation 244 between the bandwidth of the FDD uplink transmission 241 and the TDD downlink transmission 243 is increased, in order to allow a reduced level of interference at the base station. The combination of the techniques shown in Figure 3A and 3B may also be contemplated, thereby increasing the frequency separation between the TDD uplink transmission and FDD downlink transmission and/or between the FDD uplink transmission and the TDD downlink transmission.

In general terms, this may be understood as setting the at least one parameter of the receiver of the one system and/or the transmitter of the other system by one or both of: receiving at a first level of throughput during one or more first time periods and receiving at a second, reduced level of throughput during one or more second time periods; and transmitting a first level of throughput during one or more first time periods and transmitting at a second, reduced level of throughput during one or more second time periods.

In practice, the at least one parameter may comprise a frequency spectral profile of a signal transmitted by the transmitter and/or a signal received by the receiver. The frequency spectral profile affects the interference from the transmitter to the receiver. This may be understood as transmitting in only a portion of a bandwidth allocated to the transmitter and/or receiving (or using a reception filter) in only a portion of a bandwidth allocated to the receiver.

In the preferred embodiment, the at least one parameter comprises an allocation of data scheduling of sub-carriers of an OFDM signal. In this case, the parameter may comprise an allocation of the number of sub-carriers and/or the frequency of position of sub-carriers of the OFDM signal.

In another sense, the step of setting at least one parameter may comprise operating the receiver with a first filter setting during the one or more first time periods and operating the receiver with a second filter setting during one or more of the second time periods. Thus, the receiver may be restricted to a narrow bandwidth, for example when carrier aggregation is not being implemented, or to a wide bandwidth when carrier aggregation is being implemented. The first filter setting may allow reception of only of the first and second carriers and the second filter setting may allow reception of both of the first and second carriers.

A pragmatic approach to scheduling could be considered for OFDM-based signals, in which user demand is taken into account in the resource allocation. If the user requires a heavy traffic load or the service they are being provided is going to be resource heavy, then the resources may be scheduled far away from the interference problem (that is, for the downlink, in the sub-carriers closer to the uplink transmission and vice versa). Conversely, other resources may be scheduled in sub-carriers further away in frequency from the interference problem.

### Power Limitation

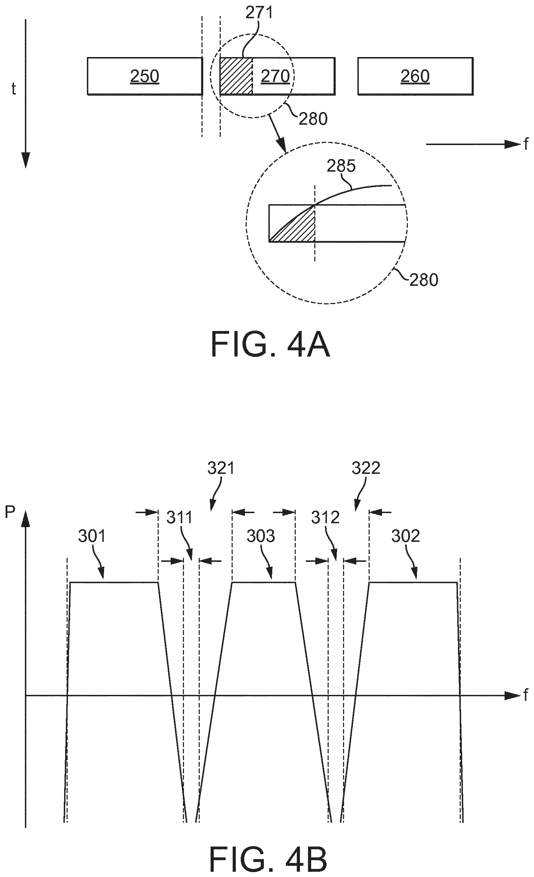

An alternative method to achieve increased frequency separation may be by changing the power profile. Referring now to Figure 4A, there is illustrated schematically a transmission/reception configuration over a range of frequencies according to a second implementation along these lines. The FDD uplink transmission 250, the FDD downlink transmission 260 and the TDD downlink transmissions 270 all use their entire frequency allocation. However, a portion of one or more of the transmissions, such as the TDD transmission 270 as illustrated may have a power limitation applied. This may result in an increased frequency separation especially in the portion 271 of the TDD downlink transmission 270 shown.

An expanded part 280 of the TDD transmission 270 is also depicted, showing the variation of power with frequency within the portion 271 of the TDD transmission 270. By limiting the power within portion 271, the interference caused by the TDD downlink transmission 270 to reception of the FDD uplink transmission 250 may be reduced and consequent problems mitigated. This explanation will now be expanded by way of a further example.

Referring next to Figure 4B, there is shown a plot of transmission power against frequency for a variant of the second implementation. This plot is simply schematic and shows an example of how the invention might be implemented. The frequency axis generally corresponds with the allocation shown in Figure 1. The power profile (in the frequency spectrum) for the FDD uplink 301, the power profile for the TDD transmission 303 and the power profile for the FDD downlink 302 are shown. The first guard band 311 between the FDD uplink and TDD transmission and second guard band 312 between the TDD transmission and FDD downlink are also indicated.

In the FDD uplink transmission 301, it will be seen that a power limitation is implemented at one end of the bandwidth, specifically the end closest to the TDD frequency allocation. In this way, the frequency separation between the FDD uplink transmission and TDD bandwidth is increased. Likewise, a power limitation is implemented at the end of the FDD downlink frequency transmission 302, specifically the end closest to the TDD frequency allocation. The TDD transmission power profile 303 has a power limitation imposed at both ends of its bandwidth. In this way, the first guard band 311 is effectively extended to a first frequency separation 321 and likewise, the second guard band 312 is effectively extended to a second frequency separation 322.

It will be recognised that not all of the power limitations shown in Figure 4 may be implemented. In practice, power limitation may be implemented only on the TDD transmissions, only on either the uplink or downlink of the TDD transmissions, or only on one or both of the FDD uplink or downlink transmissions. Other combinations will of course be considered.

In general terms, this can be understood as using parameter that comprises a power profile (in the frequency spectrum or domain) of a signal communicated by the transmitter of the other system. Specifically, the power profile may have a power limitation at one or both ends of the signals frequency spectrum. The frequency separation between the bandwidth of the signal transmitted and the filter of the receiver may thereby be increased.

### Time Separation

Another approach for increasing separation between a transmission causing interference and reception of a wanted signal may be to change the timing of transmissions. For the FDD system, this may be considered a "fast on or off" approach and for TDD systems, this may be viewed as a change to the scheduling of transmissions or a reduction in the frequency of transmissions.

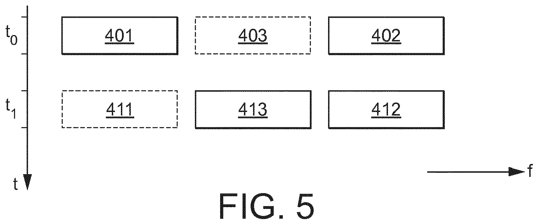

Referring now to Figure 5, there is illustrated schematically a transmission or reception configuration over a range of frequencies and times, according to a third such implementation. This is shown by way of example only, as will now be discussed. In a first time period t₀, the FDD uplink transmission 401 and FDD downlink transmission 402 are made in their normal frequency allocations. Whereas normally a TDD uplink transmission 403 would be made during this time frame, this transmission is not made and as a result, no interference occurs at the base station 10 due to interaction between the TDD and FDD systems. At the second time period t₁, the FDD downlink transmission 412 is made in the normal way. Normally, FDD uplink transmission 411 would also be made, but in this time period it is not transmitted and no uplink reception takes place on the FDD system. This assists in reducing the interference at the UE 50 in the TDD downlink receiver 72 due to the FDD uplink.

It will be observed that the total capacity between uplink and downlink is not necessarily increased by this technique, but the balance between uplink and downlink has been shifted in favour of the downlink. Likewise, the skilled person will appreciate that the balance may be shifted in favour of the uplink by changing the scheduling of transmissions accordingly. By appropriately setting the sequence of first time periods t₀ and second time periods t₁, the balance may be set at a desired level. This approach may also be applied to the improved resource allocation technique, discussed above.

In general terms, this technique may be understood as setting the parameter by one or both of: receiving at a first level of throughput during one or more first time periods and receiving at a second, reduced level of throughput during one or more second time periods; and transmitting a first level of throughput during one or more first time periods and transmitting at a second, reduced level of throughput during one or more second time periods. In practice, the second, reduced level of throughput may be zero. In other words, the transmitter may be configured not to transmit during some time periods and/or the receiver may be configured not to receive during some time periods. The one or more first time periods and one or more second time periods may be configured in a sequence in order to set the throughput achieved by communication of the first carrier to be at least a first threshold level and/or the throughput achieved by the communication of the second carrier to be at least a second threshold level.

Conversely, this may be seen as reducing the frequency of reception of the one system, for example by not receiving when the transmitter of the other system is transmitting and/or reducing the frequency of transmission of the other system by, for example, not transmitting when the receiver of the one system is receiving.

These techniques may be combined and indeed, the combination of the one, more than one or all of: resource allocation; power limitation; and timing may be implemented in practice. Indeed, the combination of any specific features described herein may be provided, even if that combination is not explicitly disclosed.

A possible combination of the approaches discussed above may consider a trade-off between static resource and/or timing allocation versus dynamic allocation. This may be based on a compromise between the improved overall bandwidth and/or throughput (bit-rate) due to increased spectrum gain and any reduction in throughput due to the interference mitigation techniques discussed above. This may take service requirements (such as QoS demands) into consideration. Additionally or alternatively, a scheduler within the UE and/or base station could predict UE demand, for example using intelligence or by comparing past demand and likely future demand, for instance in order to determine the useful throughput that may be demanded and as a consequence, whether carrier aggregation may be of benefit.

Although specific embodiments have now been described, the skilled person will appreciate that various modifications, adjustments and substitutions are possible. Many of these have been discussed above. Further variations may relate to the specific configuration of the base station 10, UE 50 or both, the cellular network architecture used, the types of signals employed (which may include FDMA, TDMA or CDMA-based signals), the specific frequency allocation to each system or the timing configuration for transmission and/or reception. Protocol changes may be desirable or necessary to implement any of the techniques described herein. These are not described or depicted, but the skilled person will understand the specific changes to be made in practice.

## Claims

1. A method for effecting carrier aggregation for a mobile terminal in a cellular network environment between a first carrier of a Frequency Division Duplex, FDD, system and a second carrier of a Time Division Duplex, TDD, system, a receiver (21, 31, 62, 72) of one of the FDD or TDD systems being susceptible to interference from a transmitter (22, 32, 61, 71) of the other system, the method comprising:
setting at least one parameter of the receiver of the one system and/or the transmitter of the other system in respect of an edge of a frequency allocation to increase a frequency separation between a filter band of the receiver of the one of the FDD or TDD systems and a filter band of the transmitter of the other system compared with a frequency separation between a frequency allocation for the receiver of the one of the FDD or TDD systems and a frequency allocation for the transmitter of the other system, such that a non-zero throughput is achieved by communication of the first carrier and a non-zero throughput is achieved by communication of the second carrier; and
wherein the at least one parameter in respect of an edge of the frequency allocation comprises one or more of: a resource allocation parameter; a frequency spectral profile parameter; a power profile parameter; a filter configuration parameter.

2. The method of claim 1, wherein the step of setting a parameter is performed such that the combined throughput achieved by communication of the first and second carriers is greater than the throughput achieved by communication of the first carrier alone and second carrier alone.

3. The method of claim 1 or claim 2, wherein the step of setting a parameter is performed such that the total throughput achieved by the downlink of the FDD and TDD systems and/or the total throughput achieved by the uplink of the FDD and TDD systems is set to be at least a desired level.

4. The method of any preceding claim, wherein the at least one parameter further comprises a timing parameter.

5. The method of claim 4, wherein the step of setting a parameter comprises one or both of:
receiving at a first level of throughput during one or more first time periods and receiving at a second, reduced level of throughput during one or more second time periods; and
transmitting a first level of throughput during one or more first time periods and transmitting at a second, reduced level of throughput during one or more second time periods.

6. The method claim 5, wherein the one or more first time periods and one or more second time periods are configured in a sequence in order to set the throughput achieved by communication of the first carrier to be at least a first threshold level and/or the throughput achieved by communication of the second carrier to be at least a second threshold level.

7. The method of claim 5 or claim 6, wherein the step of setting at least one parameter comprises operating the receiver with a first filter setting during the one or more first time periods and operating the receiver with a second filter setting during the one or more second time periods.

8. The method of any preceding claim, wherein the at least one parameter comprises a frequency spectral profile of a signal transmitted by the transmitter (22, 32, 61, 71) and/or a signal received by the receiver (21, 31, 62, 72), the frequency spectral profile affecting the interference from the transmitter to the receiver.

9. The method of claim 8, wherein the at least one parameter comprises an allocation or data scheduling of sub-carriers of an Orthogonal Frequency Division Multiplex, OFDM, signal.

10. The method of claim 9, wherein the parameter comprises an allocation of the number of sub-carriers and/or the frequency position of sub-carriers of the OFDM signal.

11. The method of any preceding claim, wherein the parameter comprises a power profile of a signal communicated by the transmitter of the other system.

12. The method of claim 11, wherein the power profile has a power limitation at one or both ends of the signal's frequency spectrum.

13. The method of any preceding claim, wherein the receiver (21, 31, 62, 72) of the one system and the transmitter (21, 32, 61, 71) of the other system are part of the same station.

14. A controller (15, 55) for a cellular network communications apparatus configured to operate in accordance with any preceding claim.

## Patentansprüche

1. Ein Verfahren zum Bewirken einer Trägeraggregation für ein mobiles Endgerät in einer zellularen Netzumgebung zwischen einem ersten Träger eines Frequenzteilungsduplex-Systems (Frequency Division Duplex, FDD-System) und einem zweiten Träger eines Zeitteilungsduplex-Systems (Time Division Duplex, TDD-System), wobei ein Empfänger (21, 31, 62, 72) eines der FDD- oder TDD-Systeme anfällig für Störungen von einem Sender (22, 32, 61, 71) des anderen Systems ist, wobei das Verfahren Folgendes umfasst:
Festlegen mindestens eines Parameters des Empfängers des einen Systems und/oder des Senders des anderen Systems im Zusammenhang mit einem Rand der Frequenzzuordnung, um im Vergleich zu einer Frequenztrennung zwischen einer Frequenzzuordnung für den Empfänger des einen der FDD- oder TDD-Systeme und einer Frequenzzuordnung für den Sender des anderen Systems eine Frequenztrennung zwischen einem Filterband des Empfängers des einen der FDD- oder TDD-Systeme und einem Filterband des Senders des anderen Systems zu erhöhen, derart, dass ein Durchsatz ungleich Null mittels Kommunikation des ersten Trägers erzielt wird und ein Durchsatz ungleich Null mittels Kommunikation des zweiten Trägers erzielt wird; und
wobei der mindestens eine Parameter im Zusammenhang mit einem Rand der Frequenzzuordnung einen oder mehrere der folgenden umfasst: einen Ressourcenzuordnungsparameter; einen Frequenzspektralprofilparameter; einen Leistungsprofilparameter; einen Filterkonfigurationsparameter.

2. Das Verfahren nach Anspruch 1, wobei der Schritt des Festlegens eines Parameters derart durchgeführt wird, dass der kombinierte Durchsatz, der mittels Kommunikation der ersten und zweiten Träger erzielt wird, größer als der Durchsatz ist, der mittels Kommunikation des ersten Trägers allein und des zweiten Trägers allein erzielt wird.

3. Das Verfahren nach Anspruch 1 oder Anspruch 2, wobei der Schritt des Festlegens eines Parameters derart durchgeführt wird, dass für den Gesamtdurchsatz, der in der Abwärtsstrecke der FDD- und TDD-Systeme erzielt wird, und/oder den Gesamtdurchsatz, der in der Aufwärtsstrecke der FDD- und TDD-Systeme erzielt wird, festgelegt wird, dass er mindestens eine gewünschte Stufe aufweist.

4. Das Verfahren nach einem vorhergehenden Anspruch, wobei der mindestens eine Parameter weiter einen Zeitsteuerungsparameter umfasst.

5. Das Verfahren nach Anspruch 4, wobei der Schritt des Festlegens eines Parameters einen oder mehrere der folgenden umfasst:
Empfangen bei einer ersten Durchsatzstufe während eines oder mehrerer erster Zeiträume und Empfangen bei einer zweiten, reduzierten Durchsatzstufe während eines oder mehrerer zweiter Zeiträume; und
Übertragen einer ersten Durchsatzstufe während eines oder mehrerer erster Zeiträume und Übertragen einer zweiten, reduzierten Durchsatzstufe während eines oder mehrerer zweiter Zeiträume.

6. Das Verfahren nach Anspruch 5, wobei der eine oder die mehreren ersten Zeiträume und der eine oder die mehreren zweiten Zeiträume in einer Folge konfiguriert sind, um für den mittels Kommunikation des ersten Trägers erzielten Durchsatz festzulegen, dass er mindestens eine erste Schwellenwertstufe aufweist, und/oder für den mittels Kommunikation des zweiten Trägers erzielten Durchsatz, dass er mindestens eine zweite Schwellenwertstufe erzielt.

7. Das Verfahren nach Anspruch 5 oder Anspruch 6, wobei der Schritt des Festlegens mindestens eines Parameters umfasst, dass der Empfänger während des einen oder der mehreren ersten Zeiträume mit einer ersten Filtereinstellung betrieben wird und dass der Empfänger während des einen oder der mehreren zweiten Zeiträume mit einer zweiten Filtereinstellung betrieben wird.

8. Das Verfahren nach einem vorhergehenden Anspruch, wobei der mindestens eine Parameter ein Frequenzspektralprofil eines durch den Sender (22, 32, 61, 71) übertragenen Signals und/oder eines durch den Empfänger (21, 31, 62, 72) empfangenen Signals umfasst, wobei das Frequenzspektralprofil die Störung von dem Sender zu dem Empfänger beeinflusst.

9. Das Verfahren nach Anspruch 8, wobei der mindestens eine Parameter eine Zuordnung oder Datenzeitplanung von Unterträgern eines Orthogonal-Frequenzteilungsmultiplex-Signals (Orthogonal Frequency Division Multiplex, OFDM-Signal) umfasst.

10. Das Verfahren nach Anspruch 9, wobei der Parameter eine Zuordnung der Anzahl an Unterträgern und/oder die Frequenzlage von Unterträgern des OFDM-Signals umfasst.

11. Das Verfahren nach einem vorhergehenden Anspruch, wobei der Parameter ein Leistungsprofil eines Signals umfasst, das durch den Sender des anderen Systems kommuniziert wurde.

12. Das Verfahren nach Anspruch 11, wobei das Leistungsprofil eine Leistungseinschränkung an einem oder beiden Enden des Frequenzspektrums des Signals aufweist.

13. Das Verfahren nach einem vorhergehenden Anspruch, wobei der Empfänger (21, 31, 62, 72) des einen Systems und der Sender (21, 32, 61, 71) des anderen Systems Teil derselben Station sind.

14. Eine Steuereinheit (15, 55) für eine zellulare Netzkommunikationseinrichtung, so konfiguriert, dass sie nach einem vorhergehenden Anspruch betrieben wird.

## Revendications

1. Un procédé de réalisation d'une agrégation de porteuses pour un terminal mobile dans un environnement de réseau cellulaire entre une première porteuse d'un système à duplexage par répartition en fréquence, FDD, et une deuxième porteuse d'un système à duplexage par répartition dans le temps, TDD, un récepteur (21, 31, 62, 72) d'un des systèmes FDD ou TDD étant sensible à un brouillage provenant d'un émetteur (22, 32, 61, 71) de l'autre système, le procédé comprenant :
le réglage d'au moins un paramètre du récepteur dudit système et/ou de l'émetteur de l'autre système par rapport à un bord d'une attribution de fréquence de façon à augmenter une séparation de fréquences entre une bande de filtrage du récepteur dudit système des systèmes FDD ou TDD et une bande de filtrage de l'émetteur de l'autre système en comparaison d'une séparation de fréquences entre une attribution de fréquence pour le récepteur dudit système des systèmes FDD ou TDD et une attribution de fréquence pour l'émetteur de l'autre système, de sorte qu'un débit non nul soit atteint par une communication de la première porteuse et un débit non nul soit atteint par une communication de la deuxième porteuse, et
où le au moins un paramètre par rapport à un bord de l'attribution de fréquence comprend un ou plusieurs paramètres parmi : un paramètre d'attribution de ressources, un paramètre de profil spectral de fréquence, un paramètre de profil de puissance, un paramètre de configuration de filtre.

2. Le procédé selon la Revendication 1, où l'opération de réglage d'un paramètre est exécutée de sorte que le débit combiné atteint par une communication des première et deuxième porteuses soit supérieur au débit atteint par une communication de la première porteuse uniquement et de la deuxième porteuse uniquement.

3. Le procédé selon la Revendication 1 ou 2, où l'opération de réglage d'un paramètre est exécutée de sorte que le débit total atteint par la liaison descendante des systèmes FDD et TDD et/ou le débit total atteint par la liaison montante des systèmes FDD et TDD soit réglé de façon à être au moins d'un niveau souhaité.

4. Le procédé selon l'une quelconque des Revendications précédentes, où le au moins un paramètre comprend en outre un paramètre temporel.

5. Le procédé selon la Revendication 4, où l'opération de réglage d'un paramètre comprend une opération ou les deux parmi :
la réception à un premier niveau de débit au cours d'une ou de plusieurs premières périodes temporelles et la réception à un deuxième niveau de débit réduit au cours d'une ou de plusieurs deuxièmes périodes temporelles, et
la transmission à un premier niveau de débit au cours d'une ou de plusieurs premières périodes temporelles et la transmission à un deuxième niveau de débit réduit au cours d'une ou de plusieurs deuxièmes périodes temporelles.

6. Le procédé selon la Revendication 5, où les une ou plusieurs premières périodes temporelles et les une ou plusieurs deuxièmes périodes temporelles sont configurées en une séquence afin de régler le débit atteint par une communication de la première porteuse de façon à être au moins d'un premier niveau seuil et/ou le débit atteint par une communication de la deuxième porteuse de façon à être au moins d'un deuxième niveau seuil.

7. Le procédé selon la Revendication 5 ou 6, où l'opération de réglage d'au moins un paramètre comprend l'actionnement du récepteur avec un premier réglage de filtre au cours des une ou plusieurs premières périodes temporelles et l'actionnement du récepteur avec un deuxième réglage de filtre au cours des une ou plusieurs deuxièmes périodes temporelles.

8. Le procédé selon l'une quelconque des Revendications précédentes, où le au moins un paramètre comprend un profil spectral de fréquence d'un signal émis par l'émetteur (22, 32, 61, 71) et/ou d'un signal reçu par le récepteur (21, 31, 62, 72), le profil spectral de fréquence affectant le brouillage de l'émetteur au récepteur.

9. Le procédé selon la Revendication 8, où le au moins un paramètre comprend une attribution ou une planification de données de sous-porteuses d'un signal de multiplexage par répartition orthogonale de la fréquence, OFDM.

10. Le procédé selon la Revendication 9, où le paramètre comprend une attribution du nombre de sous-porteuses et/ou de la position de fréquence de sous-porteuses du signal OFDM.

11. Le procédé selon l'une quelconque des Revendications précédentes, où le paramètre comprend un profil de puissance d'un signal communiqué par l'émetteur de l'autre système.

12. Le procédé selon la Revendication 11, où le profil de puissance possède une limitation de puissance à une ou les deux extrémités du spectre de fréquences du signal.

13. Le procédé selon l'une quelconque des Revendications précédentes, où le récepteur (21, 31, 62, 72) dudit système et l'émetteur (21, 32, 61, 71) de l'autre système font partie de la même station.

14. Un dispositif de commande (15, 55) destiné à un appareil de communications de réseau cellulaire configuré de façon à fonctionner selon l'une quelconque des Revendications précédentes.
